# EUROPEAN PATENT APPLICATION

(11) **EP 3 876 560 A1**
(43) Date of publication of application: **08.09.2021**
(21) Application number: 19890030.0
(22) Date of filing: 09.10.2019
(51) Int. Cl.: H04W 4/024, H04W 4/48, H04L 12/709

(54) **NAVIGATION CONTROL METHOD AND RELEVANT PRODUCT**

(30) Priority: 30.11.2018 CN 201811457275
(71) Applicant: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Manitz Finsterwald Patent- und Rechtsanwaltspartnerschaft mbB
(86) International application number: PCT/CN2019/110150
(87) International publication number: WO 2020/108100

(57) **Abstract**

A method for navigation control and related products are provided. The method is for an electronic device and includes the following. In response to detecting a launching request for a navigation application, the electronic device launches the navigation application and detects an on-board hotspot. The electronic device scans and accesses the detected on-board hotspot. The electronic device enables a smart link aggregation (SLA), and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. By adopting the technical solutions of the disclosure, it is conducive to accurately determining and selecting a suitable network communication link for data transmission, which can ensure quality and effect of the data transmission during navigation, and can further improve rate, stability, and reliability of the data transmission during navigation.

## Description

### TECHNICAL FIELD

This disclosure relates to the technical field of electronic devices, and particularly to a method for navigation control and related products.

### BACKGROUND

In-car navigation is one of new technologies developed on the basis of a global positioning system (GPS). With the widespread use of automobiles in the transportation field, in-car navigation has been well developed.

In network technologies, in order to ensure stability and reliability of links between devices and increase transmission rate, a link aggregation technology is usually used to bundle multiple physical links into a logical link to expand the bandwidth of the links. In this case, each physical link is redundant backup to each other, and when a link fails, it is possible to switch to other links to carry services. Generally, the existing car navigation system is achieved by installing a navigation terminal on a car and providing an electronic map.

### SUMMARY

According to implementations of the disclosure, a method for navigation control and related products are provided, which can improve efficiency and stability of navigation control.

In a first aspect of the disclosure, a method for navigation control is provided. The method is for an electronic device and includes the following. In response to detecting a launching request for a navigation application, the navigation application is launched and an on-board hotspot is detected. The detected on-board hotspot is scanned and accessed. A smart link aggregation (SLA) is enabled, and a first communication link of a cellular network accessed by the electronic device and a second communication link of the on-board hotspot accessed by the electronic device are determined. Data transmission of the navigation application through the first communication link and the second communication link is controlled. A navigation route for navigation is planned based on data transmission of the navigation application.

In a second aspect of the disclosure, a device for navigation control is provided. The device is for an electronic device. The device for navigation control includes a processing unit and a communication unit. The processing unit is configured to launch a navigation application and detect an on-board hotspot in response to detecting a launching request for the navigation application. The processing unit is configured to scan and access the detected on-board hotspot. The processing unit is configured to enable an SLA, and determine a first communication link of a cellular network accessed by the electronic device and a second communication link of the on-board hotspot accessed by the electronic device. The processing unit is configured to control data transmission of the navigation application through the first communication link and the second communication link. The processing unit is configured to plan a navigation route for navigation based on data transmission of the navigation application.

In a third aspect of the disclosure, an electronic device is provided. The electronic device includes a processor, a memory, a communication interface, and one or more programs. The one or more programs are stored in the memory and configured to be executed by the processor. The programs include instructions which are operable with the processor to execute the operations of the method in the first aspect of the disclosure.

In a fourth aspect of the disclosure, a computer-readable storage medium is provided. The computer-readable storage medium stores a computer program for electronic data interchange. The computer program is operable with a computer to execute part or all of the operations of the method in the second aspect of the disclosure.

In a fifth aspect of the disclosure, a computer program product is provided. The computer program product includes a non-transitory computer-readable storage medium configured to store a computer program. The computer program is operable with a computer to execute part or all of the operations of the method in the second aspect of the disclosure. The computer program product may be a software installation package.

In implementations of the disclosure, in response to detecting a launching request for a navigation application, the electronic device launches the navigation application and detects an on-board hotspot. The electronic device scans and accesses the detected on-board hotspot. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of data transmission during navigation, and further improving rate, stability, and reliability of data transmission during navigation.

### BRIEF DESCRIPTION OF THE DRAWINGS

In order to describe technical solutions of implementations or the related art more clearly, the following will give a brief description of accompanying drawings used for describing the implementations or the related art. Apparently, accompanying drawings described below are merely some implementations. Those of ordinary skill in the art can also obtain other accompanying drawings based on the accompanying drawings described below without creative efforts.
FIG. 1 is a schematic flowchart illustrating a method for navigation control according to implementations.
FIG. 2 is a schematic flowchart illustrating a method for navigation control according to other implementations.
FIG. 3 is a schematic flowchart illustrating a method for navigation control according to other implementations.
FIG. 4 is a schematic structural diagram illustrating an electronic device according to implementations.
FIG. 5 is a block diagram illustrating functional units of a device for navigation control according to implementations.

### DETAILED DESCRIPTION

In order for those skilled in the art to better understand technical solutions of the disclosure, technical solutions of implementations will be described clearly and completely with reference to accompanying drawings in the implementations. Apparently, implementations described hereinafter are merely some implementations, rather than all implementations of the disclosure. All other implementations obtained by those of ordinary skill in the art based on the implementations without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "implementation" referred to herein means that particular features, structures, or properties described in conjunction with the implementations may be defined in at least one implementation of the disclosure. The phrase "implementation" appearing in various places in the specification does not necessarily refer to the same implementation or an independent/ alternative implementation that is mutually exclusive with other implementations. Those skilled in the art will understand expressly and implicitly that an implementation described herein may be combined with other implementations.

"Electronic device" in implementations of the disclosure may include various handheld devices with wireless communication functions, on-board devices, wearable devices, computing devices, or other processing devices connected to a wireless modem, as well as various forms of user equipment (UE), mobile stations (MS), terminal devices, etc.

Generally, a single network communication link is used in navigation, without taking real-time network communication link information into consideration. As a result, a network communication link used may not be the best choice. To this end, how to efficiently and reasonably select a communication link(s) to carry data during navigation to achieve stable navigation control has become a technical problem to be solved in the field.

In view of the foregoing technical problem, implementations of the disclosure provide a method for navigation control. Hereinafter, implementations of the disclosure will be described in detail.

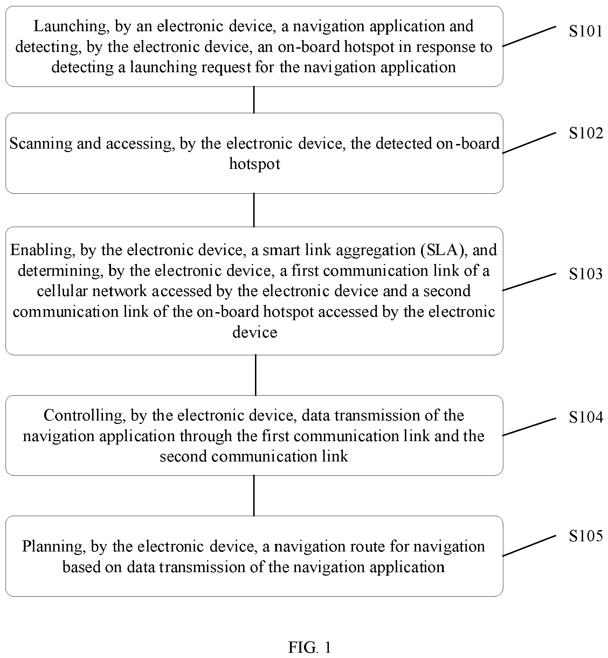

FIG. 1 is a schematic flowchart illustrating a method for navigation control according to implementations. The method for navigation control is for an electronic device. As illustrated in FIG. 1, the method for navigation control includes the following.

At block S101, in response to detecting a launching request for a navigation application, the electronic device launches the navigation application and detects an on-board hotspot.

The navigation application herein may include an application configured before the electronic device leaves the factory, and/or a third-party application installed on the electronic device.

At block S102, the electronic device scans and accesses the detected on-board hotspot.

The time when an on-board hotspot is detected is assigned as a start time. The on-board hotspot is scanned after a time interval elapse from the start time, to update hotspot information in real time. The scanning will not be stopped until the navigation ends.

At block S103, the electronic device enables a smart link aggregation (SLA), and determines a first communication link of a cellular network accessed by the electronic device and a second communication link of the on-board hotspot accessed by the electronic device.

A communication link accessed by the electronic device includes, but is not limited to, the first communication link of the cellular network and the second communication link of the on-board hotspot.

At block S104, the electronic device controls data transmission of the navigation application through the first communication link and the second communication link.

At block S105, the electronic device plans a navigation route for navigation, based on data transmission of the navigation application.

In implementations of the disclosure, in response to detecting a launching request for a navigation application, the electronic device launches the navigation application and detects an on-board hotspot. The electronic device scans and accesses the detected on-board hotspot. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of data transmission during navigation, and further improving rate, stability, and reliability of data transmission during navigation.

In some implementations, data transmission of the navigation application through the first communication link and the second communication link is controlled as follows. The electronic device detects a first-link quality of the first communication link and a second-link quality of the second communication link. In response to both the first-link quality and the second-link quality being higher than a preset link quality, the electronic device transmits data of the navigation application through the first communication link and the second communication link.

The link quality herein may be determined or represented by at least one of: a received signal strength indication, a signal-to-noise ratio, a packet-delivery ratio, a bit-error rate, and a link quality indication.

As an example, for electronic device *A,* the preset link quality is *B,* the detected first-link quality of first communication link *X* is *X1,* and the detected second-link quality of second communication link *Y is Y1,* if both first-link quality *X1* and second-link quality *Y1* are higher than preset link quality *B,* the data of the navigation application is transmitted through first communication link *X* and second communication link *Y.*

As can be seen, in implementations of the disclosure, if both the first-link quality and the second-link quality are higher than the preset link quality, the data of the navigation application is transmitted through the first communication link and the second communication link, which can ensure stability, accuracy, and efficiency of data transmission through the communication links.

In some implementations, the data of the navigation application is transmitted through the first communication link and the second communication link as follows. The electronic device transmits map data of the navigation application through the second communication link, and transmits road condition data of the navigation application through the first communication link.

In some implementations, the road condition data includes real-time road condition information, and the road condition data of the navigation application is transmitted continuously through the first communication link during navigation.

As an example, navigation application *B* is installed on electronic device *A,* if first communication link *X* and second communication link *Y* are detected, then electronic device *A* transmits map data of navigation application *B* through second communication link *Y* and transmits road condition data of navigation application *B* through first communication link *X.* The road condition data of navigation application *B* is transmitted continuously during running of navigation application *B.*

As can be seen, in implementations of the disclosure, the data scheduled for transmitting (i.e., to-be-transmitted) is divided according to the type of data service, which can improve resource utilization rate of communication links and speed up data transmission, thereby realizing efficient and convenient navigation control. In addition, the road condition information for navigation is obtained in time, which can ensure that the navigation route can be changed in time when an emergency occurs, thereby optimizing user experience of navigation control.

In some implementations, the data of the navigation application is transmitted through the first communication link and the second communication link as follows. The electronic device determines an importance degree of data scheduled for transmitting of the navigation application. The electronic device selects a communication link according to the importance degree. The electronic device transmits the data scheduled for transmitting through the selected communication link.

The importance degree of the data scheduled for transmitting may include an importance level, and the meaning represented by the value of the importance degree is set by the electronic device.

In some implementations, the communication link is selected according to the importance degree as follows. The link quality of the first communication link and the link quality of the second communication link are determined. Data of the navigation application with a higher importance degree is transmitted through a communication link with a higher link quality, and data of the navigation application with a lower importance degree is transmitted through a communication link with a lower link quality.

As an example, navigation application B is installed on electronic device *A,* first communication link *X* is detected to have first-link quality *X1* and second communication link *Y* is detected to have second-link quality *Y1*, and data *C* and *D* scheduled for transmitting are detected. If first-link quality *X1* is higher than second-link quality *Y1* and data C has an importance degree higher than that of data D, then data of the navigation application will be transmitted through first communication link *X* and second communication link *Y,* specifically, electronic device *A* transmits data *C* through first communication link *X* and transmits data *D* through second communication link *Y.*

As can be seen, in implementations of the disclosure, data transmission is performed according to an importance degree of data scheduled for transmitting, and the data scheduled for transmitting is divided, which can increase speed of data transmission, reduce the burden of the electronic device, reduce a time for a user to wait for data transmission, and improve user experience.

In some implementations, the data of the navigation application is transmitted through the first communication link and the second communication link as follows. The electronic device determines that data scheduled for transmitting of the navigation application is event report data. The electronic device transmits the event report data in parallel and repeatedly through the first communication link and the second communication link.

The event report data herein may indicate events caused by sudden changes in road condition information, events caused by changes in communication link state, and events caused by deviation from a navigation route.

As an example, navigation application *B* is installed on electronic device *A,* and first communication link *X* and second communication link *Y* are detected. During navigation control, if it determined that data *C* scheduled for transmitting is the event report data, then data *C* is transmitted in parallel and repeatedly through first communication link *X* and second communication link *Y*.

As can be seen, in implementations of the disclosure, the event report data is transmitted in parallel and repeatedly to ensure integrity of data transmission, which can avoid delay in data transmission due to instability of the communication link, thereby reducing lag of data transmission. In addition, the event report data is transmitted in parallel and repeatedly, which can improve the priority of the transmitted data and in turn make a user pay attention to the event report data and carry out corresponding operation in time.

In some implementations, the data of the navigation application is transmitted through the first communication link and the second communication link as follows. The electronic device determines that data scheduled for downloading of the navigation application is map data. The electronic device divides the map data into two groups according to transmission capabilities of the first communication link and the second communication link. The electronic device downloads the two groups of map data in parallel through the first communication link and the second communication link.

The map data herein may include map data that is not used in current navigation control, such as map data of other regions that is downloaded in advance.

For example, navigation application *B* is installed on electronic device *A,* if first communication link *X* and second communication link *Y* are detected and electronic device *A* determines that data scheduled for downloading of navigation application *B* is map data *C,* then map data *C* is divided into two groups of data *C1* and *C2* according to transmission capabilities of first communication link *X* and second communication link *Y,* and electronic device *A* downloads data *C1* and *C2* in parallel through first communication link *X* and second communication link *Y*.

As can be seen, in implementations of the disclosure, an offline map downloading scene can be selected by the user, and map data scheduled for transmitting can be downloaded in parallel, which can increase speed of data transmission, meet various demands of the user, reduce a time for a user to wait for data transmission, and improve user experience.

In some implementations, data transmission of the navigation application through the first communication link and the second communication link is controlled as follows. In response to a first-link quality being higher than a preset link quality and a second-link quality being lower than the preset link quality, the electronic device transmits data of the navigation application through the first communication link. In response to the first-link quality being lower than the preset link quality and the second-link quality being higher than the preset link quality, the electronic device transmits the data of the navigation application through the second communication link. In response to both the first-link quality and the second-link quality being lower than the preset link quality, the electronic device transmits position data of the navigation application through a global positioning system (GPS).

The preset link quality herein is a threshold of link quality set in advance.

As an example, navigation application *B* is installed on electronic device *A,* the preset link quality is *C*, first communication link *X* is detected to have first-link quality *X1* and second communication link *Y* is detected to have second-link quality *Y1.* If first-link quality *X1* is higher than preset link quality *C* and second-link quality *Y1* is lower than preset link quality *C,* data of navigation application *C* is transmitted through first communication link *X.*

As another example, navigation application *B* is installed on electronic device *A,* the preset link quality is *C,* and first communication link *X* is detected to have first-link quality *X1* and second communication link *Y* is detected to have second-link quality *Y1.* If first-link quality *X1* is lower than preset link quality *C* and second-link quality *Y1* is higher than preset link quality *C,* data of navigation application *C* is transmitted through second communication link *Y*.

As still another example, navigation application *B* is installed on electronic device *A,* the preset link quality is *C,* and first communication link *X* is detected to have first-link quality *X1* and second communication link *Y* is detected to have second-link quality *Y1.* If both first-link quality *X1* and second-link quality *Y1* are lower than preset link quality *C,* position data of navigation application *B* is transmitted through the GPS.

As can be seen, in implementations of the disclosure, according to comparison of the link quality of the first communication link and the link quality of the second communication link with the preset link quality, a communication link with a higher link quality is selected for data transmission. In this way, integrity, efficiency, and safety of data transmission can be guaranteed. In addition, in the case that both the link quality of the first communication link and the link quality of the second communication link cannot meet the preset link quality, data transmission is performed through the GPS, which can avoid data packet loss caused by interruption of data transmission due to low link quality of the communication link, thereby ensuring integrity of data transmission.

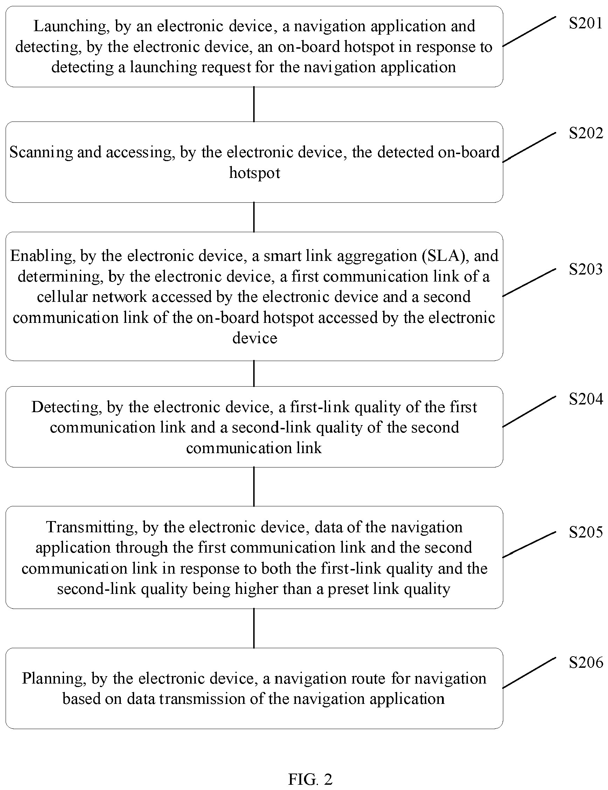

Similar to the above implementations described with reference to FIG. 1, FIG. 2 is a schematic flowchart illustrating a method for navigation control according to other implementations. The method for navigation control is applicable to an electronic device. As illustrated in FIG. 2, the method for navigation control includes the following.

At block S201, upon detecting a launching request for a navigation application, the electronic device launches the navigation application and detects an on-board hotspot.

At block S202, the electronic device scans and accesses the detected on-board hotspot.

At block S203, the electronic device enables an SLA, and determines a first communication link of a cellular network accessed by the electronic device and a second communication link of the on-board hotspot accessed by the electronic device.

At block S204, the electronic device detects a first-link quality of the first communication link and a second-link quality of the second communication link.

At block S205, in response to both the first-link quality and the second-link quality being higher than a preset link quality, the electronic device transmits data of the navigation application through the first communication link and the second communication link.

At block S206, the electronic device plans a navigation route for navigation based on data transmission of the navigation application.

In implementations of the disclosure, upon detecting a launching request for a navigation application, the electronic device launches the navigation application and detects an on-board hotspot. The electronic device scans and accesses the detected on-board hotspot. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of data transmission during navigation, and further improving rate, stability, and reliability of data transmission during navigation.

Furthermore, in implementations of the disclosure, if both the first-link quality and the second-link quality are higher than the preset link quality, the data of the navigation application is transmitted through the first communication link and the second communication link, which can ensure stability, accuracy, and efficiency of data transmission through the communication links.

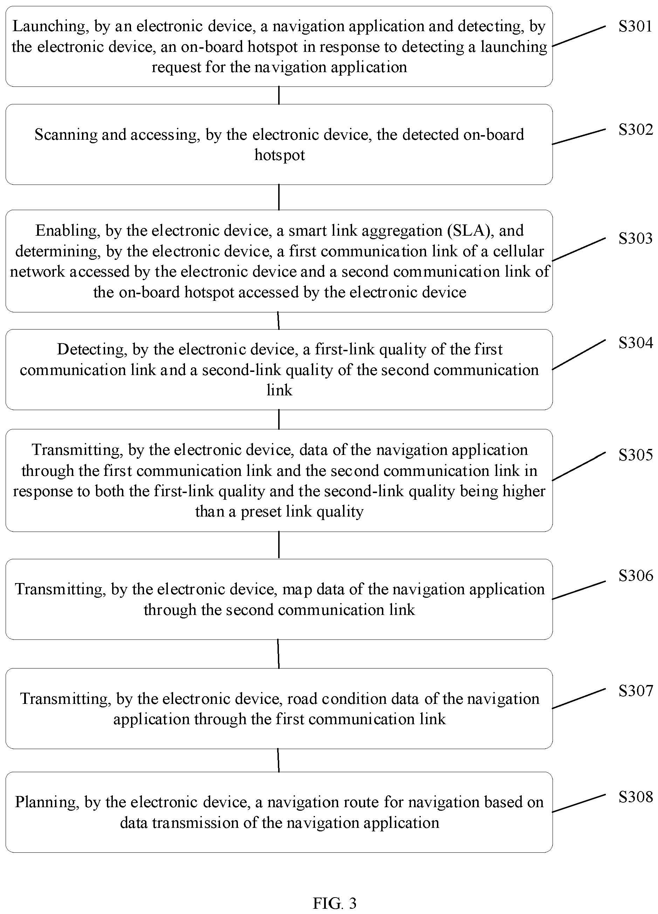

Similar to the above implementations described with reference to FIG. 1, FIG. 3 is a schematic flowchart illustrating a method for navigation control according to other implementations. As illustrated in FIG. 3, the method for navigation control includes the following.

At block S301, upon detecting a launching request for a navigation application, the electronic device launches the navigation application and detects an on-board hotspot.

At block S302, the electronic device scans and accesses the detected on-board hotspot.

At block S303, the electronic device enables an SLA, and determines a first communication link of a cellular network accessed by the electronic device and a second communication link of the on-board hotspot accessed by the electronic device.

At block S304, the electronic device detects a first-link quality of the first communication link and a second-link quality of the second communication link.

At block S305, in response to both the first-link quality and the second-link quality being higher than a preset link quality, the electronic device transmits data of the navigation application through the first communication link and the second communication link.

At block S306, the electronic device transmits map data of the navigation application through the second communication link.

At block S307, the electronic device transmits road condition data of the navigation application through the first communication link.

At block S308, the electronic device plans a navigation route for navigation based on data transmission of the navigation application.

In implementations of the disclosure, upon detecting a launching request for a navigation application, the electronic device launches the navigation application and detects an on-board hotspot. The electronic device scans and accesses the detected on-board hotspot. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of data transmission during navigation, and further improving rate, stability, and reliability of data transmission during navigation.

Furthermore, in implementations of the disclosure, the data scheduled for transmitting is divided according to the type of data service, which can improve resource utilization rate of communication links and speed up data transmission, thereby realizing efficient and convenient navigation control. In addition, the road condition information for navigation is obtained in time, which can ensure that the navigation route can be changed in time when an emergency occurs, thereby optimizing user experience of navigation control.

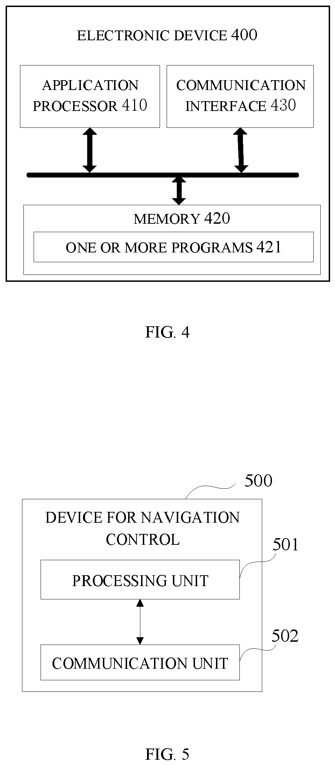

Similar to the above implementations described with reference to FIG. 1, FIG. 2, and FIG. 3, FIG. 4 is a schematic structural diagram illustrating an electronic device 400 according to implementations. As illustrated in FIG. 4, the electronic device 400 includes an application processor 410, a memory 420, a communication interface 430, and one or more programs 421. The one or more programs 421 are stored in the memory 420 and configured to be executed by the application processor 410. The one or more programs 421 include instructions which are operable to execute the following operations. Upon detecting a launching request for a navigation application, the navigation application is launched and an on-board hotspot is detected. The detected on-board hotspot is scanned and accessed. An SLA is enabled, and a first communication link of a cellular network accessed by the electronic device and a second communication link of the on-board hotspot accessed by the electronic device are determined. Data transmission of the navigation application through the first communication link and the second communication link is controlled. A navigation route for navigation is planned based on data transmission of the navigation application.

In implementations of the disclosure, upon detecting a launching request for a navigation application, the electronic device launches the navigation application and detects an on-board hotspot. The electronic device scans and accesses the on-board hotspot detected. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of data transmission during navigation, and further improving rate, stability, and reliability of data transmission during navigation.

In some implementations, the instructions of the programs operable with the application processor to control data transmission of the navigation application through the first communication link and the second communication link are operable with the application processor to: detect a first-link quality of the first communication link and a second-link quality of the second communication link; and transmit data of the navigation application through the first communication link and the second communication link on condition that both the first-link quality and the second-link quality are higher than a preset link quality.

In some implementations, the instructions of the programs operable with the application processor to transmit the data of the navigation application through the first communication link and the second communication link are operable with the application processor to: transmit map data of the navigation application through the second communication link; and transmit road condition data of the navigation application through the first communication link.

In some implementations, the instructions of the programs operable with the application processor to transmit the data of the navigation application through the first communication link and the second communication link are operable with the application processor to: determine an importance degree of data scheduled for transmitting of the navigation application; select a communication link according to the importance degree; and transmit the data scheduled for transmitting through the communication link selected.

In some implementations, the instructions of the programs operable with the application processor to transmit the data of the navigation application through the first communication link and the second communication link are operable with the application processor to: determine that data scheduled for transmitting of the navigation application is event report data; and transmit the event report data in parallel and repeatedly through the first communication link and the second communication link.

In some implementations, the instructions of the programs operable with the application processor to transmit the data of the navigation application through the first communication link and the second communication link are operable with the application processor to: determine that data scheduled for downloading of the navigation application is map data; divide the map data into two groups according to transmission capabilities of the first communication link and the second communication link; and download the two groups of map data in parallel through the first communication link and the second communication link.

In some implementations, the instructions of the programs operable with the application processor to control data transmission of the navigation application through the first communication link and the second communication link are operable with the application processor to: transmit data of the navigation application through the first communication link on condition that a first-link quality is higher than a preset link quality and a second-link quality is lower than the preset link quality; transmit the data of the navigation application through the second communication link on condition that the first-link quality is lower than the preset link quality and the second-link quality is higher than the preset link quality; and transmit position data of the navigation application through a GPS on condition that both the first-link quality and the second-link quality are lower than the preset link quality.

The foregoing technical solutions of the implementations of the disclosure are mainly described from the viewpoint of execution of the method. It can be understood that, in order to implement the above functions, the electronic device includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the electronic device in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in implementations of the disclosure is schematic and is merely a logical function division; there may be other division manners in actual implementation.

FIG. 5 is a block diagram illustrating functional units of a device 500 for navigation control according to implementations. The device 500 for navigation control is applicable to an electronic device. As illustrated in FIG. 5, the device 500 for navigation control includes a processing unit 501 and a communication unit 502. The processing unit 501 is configured to launch a navigation application and detect an on-board hotspot upon detecting a launching request for the navigation application. The processing unit 501 is configured to scan and access the on-board hotspot detected. The processing unit 501 is configured to enable an SLA, and determine a first communication link of a cellular network accessed by the electronic device and a second communication link of the on-board hotspot accessed by the electronic device. The processing unit 501 is configured to control data transmission of the navigation application through the first communication link and the second communication link. The processing unit 501 is configured to plan a navigation route for navigation based on data transmission of the navigation application.

In implementations of the disclosure, upon detecting a launching request for a navigation application, the electronic device launches the navigation application and detects an on-board hotspot. The electronic device scans and accesses the on-board hotspot detected. The electronic device enables an SLA, and determines a first communication link of a cellular network accessed by the electronic device and a second communication link of the on-board hotspot accessed by the electronic device. The electronic device controls data transmission of the navigation application through the first communication link and the second communication link. The electronic device plans a navigation route for navigation based on data transmission of the navigation application. According to the technical solutions of the disclosure, fast and efficient navigation control is achieved through multiple network communication links with aid of a link aggregation technology, which is conducive to accurately determining and selecting a suitable network communication link for data transmission, thereby ensuring quality and effect of the data transmission during navigation, and further improving rate, stability, and reliability of the data transmission during navigation.

In some implementations, the processing unit 501 configured to control data transmission of the navigation application through the first communication link and the second communication link is configured to: detect a first-link quality of the first communication link and a second-link quality of the second communication link; and transmit data of the navigation application through the first communication link and the second communication link on condition that both the first-link quality and the second-link quality are higher than a preset link quality.

In some implementations, the processing unit 501 configured to transmit the data of the navigation application through the first communication link and the second communication link is configured to: transmit map data of the navigation application through the second communication link; and transmit road condition data of the navigation application through the first communication link.

In some implementations, the processing unit 501 configured to transmit the data of the navigation application through the first communication link and the second communication link is configured to: determine an importance degree of data scheduled for transmitting of the navigation application; select a communication link according to the importance degree; and transmit the data scheduled for transmitting through the communication link selected.

In some implementations, the processing unit 501 configured to transmit the data of the navigation application through the first communication link and the second communication link is configured to: determine that data scheduled for transmitting of the navigation application is event report data; and transmit the event report data in parallel and repeatedly through the first communication link and the second communication link.

In some implementations, the processing unit 501 configured to transmit the data of the navigation application through the first communication link and the second communication link is configured to: determine that data scheduled for downloading (i.e., to-be-downloaded) of the navigation application is map data; divide the map data into two groups according to transmission capabilities of the first communication link and the second communication link; and download the two groups of map data in parallel through the first communication link and the second communication link.

In some implementations, the processing unit 501 configured to control data transmission of the navigation application through the first communication link and the second communication link is configured to: transmit data of the navigation application through the first communication link on condition that a first-link quality is higher than a preset link quality and a second-link quality is lower than the preset link quality; transmit the data of the navigation application through the second communication link on condition that the first-link quality is lower than the preset link quality and the second-link quality is higher than the preset link quality; and transmit position data of the navigation application through a GPS on condition that both the first-link quality and the second-link quality are lower than the preset link quality.

According to implementations of the disclosure, a computer-readable storage medium is further provided. The computer-readable storage medium is configured to store a computer program for electronic data interchange. The computer program is operable with a computer to execute part or all of the operations of the method described in the foregoing method implementations. "Computer" referred to herein includes an electronic device.

According to implementations of the disclosure, a computer program product is further provided. The computer program product includes a non-transitory computer-readable storage medium configured to store a computer program. The computer program is operable with a computer to execute part or all of the operations of the method described in the foregoing method implementations. The computer program product may be a software installation package. "Computer" referred to herein includes an electronic device.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units through some interfaces, and may be electrical connection or other forms of connection.

The units described as separate components may or may not be physically separated, the components illustrated as units may or may not be physical units, that is, they may be in the same place or may be distributed to multiple network elements. Part or all of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to execute all or part of the operations described in the various implementations of the disclosure. The memory includes various medium capable of storing program codes, such as a universal serial bus (USB), a read-only memory (ROM), a random access memory (RAM), a mobile hard disk, Disk, compact disc (CD), or other medium that can store program codes.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, Disk or CD, and so on.

While the principles and implementations of the disclosure have been described in connection with illustrative implementations, it is to be understood that foregoing implementations are merely used to help understand the method and the core idea of the disclosure. As will occur to those skilled in the art, the disclosure is susceptible to various modifications and changes without departing from the spirit and principle of the disclosure. Therefore, the disclosure is not to be limited to the disclosed implementations.

## Claims

1. A method for navigation control, for an electronic device, comprising:
launching a navigation application and detecting an on-board hotspot in response to detecting a launching request for the navigation application;
scanning and accessing the detected on-board hotspot;
enabling a smart link aggregation, SLA, and determining a first communication link of a cellular network accessed by the electronic device and a second communication link of the on-board hotspot accessed by the electronic device;
controlling data transmission of the navigation application through the first communication link and the second communication link; and
planning a navigation route for navigation based on data transmission of the navigation application.

2. The method of claim 1, wherein controlling data transmission of the navigation application through the first communication link and the second communication link comprises:
detecting a first-link quality of the first communication link and a second-link quality of the second communication link; and
transmitting data of the navigation application through the first communication link and the second communication link in response to both the first-link quality and the second-link quality being higher than a preset link quality.

3. The method of claim 2, wherein transmitting the data of the navigation application through the first communication link and the second communication link comprises:
transmitting map data of the navigation application through the second communication link; and
transmitting road condition data of the navigation application through the first communication link.

4. The method of claim 3, wherein the road condition data comprises real-time road condition information, and transmitting the road condition data of the navigation application through the first communication link comprises:
transmitting the road condition data of the navigation application continuously through the first communication link during navigation.

5. The method of claim 2, wherein transmitting the data of the navigation application through the first communication link and the second communication link comprises:
determining an importance degree of data scheduled for transmitting of the navigation application;
selecting a communication link according to the importance degree; and
transmitting the data scheduled for transmitting through the selected communication link.

6. The method of claim 5, wherein selecting the communication link according to the importance degree comprises:
determining the link quality of the first communication link and the link quality of the second communication link; and
transmitting data of the navigation application with a higher importance degree through a communication link with a higher link quality and transmitting data of the navigation application with a lower importance degree through a communication link with a lower link quality.

7. The method of claim 2, wherein transmitting the data of the navigation application through the first communication link and the second communication link comprises:
determining that data scheduled for transmitting of the navigation application is event report data; and
transmitting the event report data in parallel and repeatedly through the first communication link and the second communication link.

8. The method of claim 2, wherein transmitting the data of the navigation application through the first communication link and the second communication link comprises:
determining that data scheduled for downloading of the navigation application is map data;
dividing the map data into two groups according to transmission capabilities of the first communication link and the second communication link; and
downloading the two groups of map data in parallel through the first communication link and the second communication link.

9. The method of any of claims 1 to 8, wherein controlling data transmission of the navigation application through the first communication link and the second communication link comprises:
transmitting data of the navigation application through the first communication link in response to a first-link quality being higher than a preset link quality and a second-link quality being lower than the preset link quality;
transmitting the data of the navigation application through the second communication link in response to the first-link quality being lower than the preset link quality and the second-link quality being higher than the preset link quality; and
transmitting position data of the navigation application through a global positioning system, GPS, in response to both the first-link quality and the second-link quality being lower than the preset link quality.

10. A device for navigation control, for an electronic device, the device comprising a processing unit and a communication unit, wherein the processing unit is configured to:
launch a navigation application and detect an on-board hotspot in response to detecting a launching request for the navigation application;
scan and access the detected on-board hotspot;
enable a smart link aggregation, SLA, and determine a first communication link of a cellular network accessed by the electronic device and a second communication link of the on-board hotspot accessed by the electronic device;
control data transmission of the navigation application through the first communication link and the second communication link; and
plan a navigation route for navigation based on data transmission of the navigation application.

11. The device of claim 10, wherein the processing unit configured to control data transmission of the navigation application through the first communication link and the second communication link is configured to:
detect a first-link quality of the first communication link and a second-link quality of the second communication link; and
transmit data of the navigation application through the first communication link and the second communication link in response to both the first-link quality and the second-link quality being higher than a preset link quality.

12. The device of claim 11, wherein the processing unit configured to transmit the data of the navigation application through the first communication link and the second communication link is configured to:
transmit map data of the navigation application through the second communication link; and
transmit road condition data of the navigation application through the first communication link.

13. The device of claim 12, wherein the road condition data comprises real-time road condition information, and the processing unit configured to transmit the road condition data of the navigation application through the first communication link is configured to:
transmit the road condition data of the navigation application continuously through the first communication link during navigation.

14. The device of claim 11, wherein the processing unit configured to transmit the data of the navigation application through the first communication link and the second communication link is configured to:
determine an importance degree of data scheduled for transmitting of the navigation application;
select a communication link according to the importance degree; and
transmit the data scheduled for transmitting through the selected communication link.

15. The device of claim 14, wherein the processing unit configured to select the communication link according to the importance degree is configured to:
determine the link quality of the first communication link and the link quality of the second communication link; and
transmit data of the navigation application with a higher importance degree through a communication link with a higher link quality and transmit data of the navigation application with a lower importance degree through a communication link with a lower link quality.

16. The device of claim 11, wherein the processing unit configured to transmit the data of the navigation application through the first communication link and the second communication link is configured to:
determine that data scheduled for transmitting of the navigation application is event report data; and
transmit the event report data in parallel and repeatedly through the first communication link and the second communication link.

17. The device of claim 11, wherein the processing unit configured to transmit the data of the navigation application through the first communication link and the second communication link is configured to:
determine that data scheduled for downloading of the navigation application is map data;
divide the map data into two groups according to transmission capabilities of the first communication link and the second communication link; and
download the two groups of map data in parallel through the first communication link and the second communication link.

18. The device of any of claims 10 to 17, wherein the processing unit configured to control data transmission of the navigation application through the first communication link and the second communication link is configured to:
transmit data of the navigation application through the first communication link in response to a first-link quality being higher than a preset link quality and a second-link quality being lower than the preset link quality;
transmit the data of the navigation application through the second communication link in response to the first-link quality being lower than the preset link quality and the second-link quality being higher than the preset link quality; and
transmit position data of the navigation application through a global positioning system, GPS, in response to both the first-link quality and the second-link quality being lower than the preset link quality.

19. An electronic device, comprising:
a processor;
a memory;
a communication interface; and
one or more programs, stored in the memory and configured to be executed by the processor;
the programs comprising instructions which are operable with the processor to execute the method of any of claims 1 to 9.

20. A computer-readable storage medium, storing a computer program for electronic data interchange, the computer program being operable with a computer to execute the method of any of claims 1 to 9.
